# EUROPEAN PATENT SPECIFICATION

(11) **EP 3 590 765 B1**
(45) Date of publication and mention of the grant of the patent: **04.11.2020**
(21) Application number: 18181571.3
(22) Date of filing: 04.07.2018
(51) Int. Cl.: B60R 9/048, B60R 9/10

(54) **BIKE CARRIER**
FAHRRADTRÄGER
SUPPORT DE VÉLO

(43) Date of publication of application: 08.01.2020
(73) Proprietor: Thule Sweden AB, 335 04 Hillerstorp (SE)
(72) Inventor: PERSSON, Joakim, 56831 Skillingaryd (SE); ADLER, Jan, 554 48 Jönköping (SE); OLAISON, Hannes, 791 37 Falun (SE); NORDSTRÖM, Simon, 335 73 Hillerstorp (SE)
(74) Representative: Wallentin, Lars

(56) References cited:
- WO-A1-2013/040267
- WO-A1-2017/214066
- WO-A2-2007/022274
- US-A1- 2015 210 222

## Description

### Field of the invention

The present invention relates to a bike carrier comprising a fixation unit adapted to fix a fork of a bike to the bike carrier.

### Background

Bike carriers have become increasingly popular owing to the popularity of recreational and competitive cycling. Therefore, the demand for bike carriers of different types has grown significantly. In the market, various types of bike carriers are available. One of that types of bike carriers is a bike carrier that allows a fixation of a bike with demounted front wheel. In other words, such bike carriers allow the fixation of a bike fork on the bike carrier instead of supporting and fixing a front wheel on the bike carrier.

Nowadays, different fixation mechanisms for fixing the front wheel to the fork of the bike are available including a fork type which allows mounting of the front wheel using a quick release skewer and a fork type which allows a fixation of the front wheel by using a so-called thru axle. Such a thru axle is essentially a large pin that passes through holes in the fork tips to secure the wheel. Using such thru axles has the benefit, that the coupling of the front wheel to the fork is maximized regarding stiffness. Furthermore, a further benefit of using thru axles is to minimize power losses.

Due to these differences in construction of bike forks, it is necessary to provide bike carriers having fixation mechanisms allowing to mount the respective fork on the bike carrier. Since quick release skewer type forks and thru axle type forks are different from a construction and functional side, it is necessary to provide corresponding mechanisms that allow their fixation on the bike carrier. In the market, systems are known that are adapted to only one of the above-mentioned fork types but allow the fixation of the other fork type by using a specific adapter. While such solutions generally enable a user to transport bikes with different fork types, such systems are inconvenient for the user as the user has to convert the bike carrier.

WO 2017/214066 A1 discloses a fork-mount bicycle carrier according to the preamble of claim 1 with a fixation unit which is adaptable in order to realize two fixation options.

### Summary

It is the object of the invention to provide an enhanced bike carrier providing an easier transport of bikes having different fork types.

The object is solved by a bike carrier according to independent claim 1. Advantageous further formations are subject of the dependent claims wherein specific further modifications can be gleaned from the following summary.

According to a first aspect, a bike carrier comprising a fixation unit is provided. The fixation unit is adapted to fix a fork of a bike to the bike carrier. In the context of the present disclosure, a fixation of a fork of a bike carrier can be understood as a direct fixation of the fork to the bike carrier or can be understood as an indirect fixation of the fork using a thru axle for instance. In other words, the fixation unit does not need to be adapted for a direct contact with the fork. However, a fixation of a fork is to be understood as a fixation of a fork with demounted wheel.

According to the present invention, the bike carrier comprises two coexisting fixation options for mounting a fork to the bike carrier. Accordingly, the core of the invention can be seen in the provision of two coexisting fixation options. Both fixation options are available when no bike is mounted on the bike carrier or no fork is mounted to the fixation unit. Accordingly, a user can fix different kinds of forks on the fixation unit without the need to convert the fixation unit to fit to the respective fork type. Accordingly, the fixation unit is configured to allow a coversionless fixation of different fork types. Hence, the core of the invention is to provide a bike carrier on which both fixation options are always available. Therefore, a user has the possibility to chose between both fixation options without any further interaction, modification or conversion of the bike carrier.

Preferably, the fixation unit is configured such that both of the coexisting fixation options are simultaneously available for mounting a fork of a bike thereto. In this way, each of the fixation options is available at the same time for mounting a certain type of fork to the bike carrier. Accordingly, the usability of the bike carrier is increased for the user as the user does not need to perform any specific steps for converting the fixation unit so as to fit to different fork types. More specifically, it is not necessary to use any adapters or to operate any mechanism so as to render one fixation option available for a certain fork type. This means that in theory, the bike carrier can be configured to allow a simultaneous fixation of two different fork types provided that the configuration of the bike carrier is such that the fixation options are suitably spaced from each other.

Preferably, the fixation unit is configured such that a fixation of a thru axle type fork and a fixation of a quick release skewer type force are simultaneously available. Accordingly, one of the fixation options can allow the fixation of a thru axle type fork and the other one of the fixation options can allow the fixation of a quick release skewer type fork at the same time. With such a configuration, the user is able to fix the nowadays prevailing kinds of fork types to the bike carrier.

The fixation of a thru axle type fork can be realized in different ways. For example, it is possible to provide a mechanism which comprises protrusions or protruding pins that are arranged movably and allow an engagement with thru axle openings provided in the end portions of the fork. In this way, the fork would be in direct contact with the bike carrier. On the other hand, it is possible to fix a thru axle in the thru axle type fork without a front wheel. The thru axle can then be used for the fixation of the fork on the bike carrier. For instance, the fixation unit can comprise a mechanism which is able to clamp the thru axle that is inserted in the thru axle type fork so that the thru axle type fork is reliably fixed by means of the fixation unit. Again, it is to be stressed that simultaneously available is to be understood in a temporal sense according to which both options are available at the same time.

Preferably, the fixation unit is configured such that one or each fixation option is a clamp type fixation option. One of such clamp type fixation options can be the option as described above with respect to the clamping of a thru axle in the fixation unit. As regards the fixation of a quick release skewer type fork, such a type of fork is normally fixed by a clamping action. For that, the fixation unit can comprise a quick release skewer type mechanism that allows the accommodation of a split end of the fork and a corresponding clamping of the split end of the fork. The split end can comprise a U-shaped recess which in normal use of the bike is oriented substantially downward. In other words, a quick release skewer can be inserted into the split ends of the fork from below when the bike is positioned for normal use. Accordingly, if the fixation unit comprises a quick release skewer type fixation, the split ends of the fork can be inserted on a shaft or pin of the quick release skewer type fixation from above.

Preferably, one or each fixation option can be configured for a direct engagement with the fork. In such a configuration, the fork can be directly mounted on the fixation unit without the need of a further element such as a thru axle mounted on the fork.

The fixation unit comprises a first fixation mechanism and a second fixation mechanism. The first fixation mechanism can be adapted to mount a thru axle type fork. Furthermore, the first fixation mechanism can be configured for clamping a thru axle of the thru axle type fork. The second fixation mechanism can be configured to clamp the quick release skewer type fork.

The first fixation mechanism and the second fixation mechanism are provided at different positions of the bike carrier. Different configurations are available in this respect. For example, it is possible that the first fixation mechanism and the second fixation mechanism are spaced from each other in longitudinal direction of the bike carrier and/or in longitudinal direction of the fixation unit. Furthermore, it is possible that the first fixation mechanism and the second fixation mechanism are spaced from each other in vertical direction of the bike carrier and/or in vertical direction of the fixation unit. It is also possible that the first fixation mechanism and the second fixation mechanism are spaced from each other in longitudinal and vertical direction of the bike carrier and/or of the fixation unit.

In a preferable arrangement, the first fixation mechanism and the second fixation mechanism are vertically aligned. In other words, the first fixation mechanism and the second fixation mechanism can be arranged at the same or substantially the same longitudinal position of the bike carrier or fixation unit. In this way, it is possible to provide a very compact configuration of the fixation unit as the fixation unit can be configured shorter compared to other arrangements where the first fixation mechanism and the second fixation mechanism are spaced from each other in longitudinal direction of the bike carrier.

The fixation unit can comprise operating mechanisms for individually operating the first fixation mechanism and the second fixation mechanism. In this way, it is possible to use mechanisms of low complexity for driving the respective fixation mechanism.

According to a preferable embodiment, a fixation unit is provided which comprises an operating mechanism that is configured to simultaneously operate the first fixation mechanism and the second fixation mechanism. With such a configuration, it is possible to provide a single operating member for driving both fixation mechanisms. With such a configuration, the usability of the bike carrier is enhanced. For example, an operating member can be provided at a longitudinal end portion of the bike carrier ensuring good accessibility to the same.

Preferably, the operating mechanism is configured to transfer an input force to the first fixation mechanism and the second fixation mechanism. Preferably, the operating mechanism is configured such that the entire input force is transferred to an active fixation mechanism of the first fixation mechanism and the second fixation mechanism. The active fixation mechanism is the one of the fixation mechanisms at which the fork is to be mounted or fixed. Accordingly, the operating mechanism can be designed considering the specific constructions of the first fixation mechanism and the second fixation mechanism. Since the first fixation mechanism and the second fixation mechanism are operatively coupled by means of the operating mechanism, an operation of the operating mechanism leads to a movement of elements in both fixation mechanisms. Accordingly, it is necessary to provide such arrangements of the fixation mechanisms that the respective fixation mechanism is fully operative in the range needed for performing its fixation action for the respective fork type. For example, in case the fixation mechanism uses clamping members that are moved with respect to each other in order to clamp an element of the bike fork or a thru axle between them, it is necessary to provide an arrangement that allows the fixation of differently sized elements. For example, thru axles with different diameters are available on the market. Accordingly, it is beneficial to configure both fixation mechanisms and the operating mechanism such that a wide range of thru axles having different diameters can be clamped in one fixation mechanism. For that, it is necessary to coordinate the operating mechanism and the fixation mechanisms such that a function regarding differently sized elements is possible over the broadest possible range. For example, in case the fixation mechanisms comprise clamping mechanism, it is necessary to coordinate the functions of the fixation mechanisms such that none of the fixation mechanisms reaches its end position and consequently blocks a movement of the other fixation mechanism.

Preferably, the operating mechanism comprises a first force transmission arrangement for transferring an input force from an operating member to the first fixation mechanism and a second force transmission arrangement for transferring an input force to the second fixation mechanism. For example, the first force transmission arrangement can be configured to convert a rotational input force into a translatory movement of a member of the operating mechanism. Accordingly, one of the first and second force transmission arrangements can be configured to transfer a rotational movement of an element into a translatory movement of another element. Furthermore, one or both of the force transmission arrangements can comprise a specific transmission ratio allowing to increase forces, for instance. Different force transmission arrangements are available that can be suitably combined in order to drive the first fixation mechanism and the second fixation mechanism. Such force transmission arrangements include gearing mechanisms, mechanisms using wires or chains, or transmission arrangements that use rigid links. It is noted that the first force transmission arrangement and the second force transmission arrangement can be of different types.

Preferably, the operating mechanism is configured such that the first fixation mechanism and the second fixation mechanism are coordinated such that each of the first fixation mechanism and the second fixation mechanism is operable within a predetermined movement range without interfering with the function of the other one of the fixation mechanisms. Accordingly, the operating mechanism couples both fixation mechanisms such that none of the fixation mechanisms blocks the desired function of the other one, at least in a specific range. For example, the configuration is preferably such that a clamping force at thru axle fixation position is available over a predetermined range of differently sized thru axle diameters. In other words, the mechanisms are coordinated such that the movable clamping members of the fixation mechanism for the quick release skewer type fork do not abut stationary clamping elements as long as the thru axle fixation position operates in the predetermined range.

According to a further preferable embodiment, the first force transmission arrangement is configured to transfer an input force input via the operating member into a translatory or a pivoting movement of a movable clamping member of the first fixation mechanism. The translatory movement can be a sliding movement of the movable clamping member or a carrier supporting the movable clamping member. The second force transmission arrangement can be configured to transfer a movement of the clamping member or carrier into a movement of movable clamping members of the second fixation mechanism. Preferably, the movement of the clamping members is a translatory movement. Preferably, the movable clamping members of the second fixation mechanism are shaped as mushroom-like portions with substantially cylindrical portions and wider portions, for example portions with increased diameter compared to the diameter of the cylindrical portions, provided on a free end of the cylindrical portions.

Preferably, the second force transmission arrangement is configured to provide a force amplification. The force amplification can comprise a ratio of 1 to 2. In this way, the force available at each of the movable clamping members of the second fixation mechanism corresponds to a clamping force available at the movable clamping member of the first fixation mechanism. In other words, when the first fixation mechanism is configured to clamp a thru axle and the second fixation mechanism is configured to clamp a quick release skewer type fork, each prong of the fork can be clamped with the same force as is available at the first fixation mechanism for clamping the thru axle.

Preferably, a movement direction of the movable clamping member of the first fixation mechanism is perpendicular to a movement direction of the movable clamping members of the second fixation mechanism. For example, the movement direction of the movable clamping member of the first fixation mechanism can be in longitudinal direction of the bike carrier. It follows that with such a configuration, the movement direction of the movable clamping members of the second fixation mechanism would be in transverse direction of the bike carrier, preferably in horizontal direction when the bike carrier is mounted on a vehicle.

Preferably, the second force transmission arrangement comprises a flexible tensile force transfer member for transferring a tensile force. Preferably, the flexible tensile force transfer member is a wire or a metal strap which can be made of stainless steel and can comprise anchor portions for coupling the tensile force transfer members to the clamping members or to a supporting portion on the bike carrier. The anchor portions can be made of zinc and can be provided on respective ends of the flexible tensile force transfer member. Preferably, the flexible tensile force transfer member is a metal strap and preferably each of the metal straps comprises grooves, protrusions or through-holes for mechanically coupling the same to the anchor portions.

Preferably, the second force transmission arrangement comprises guiding members for deflecting the flexible tensile force transfer member. The guiding members are preferably guide rolls. The guiding members can be configured as low-friction guiding members with bearings for supporting the same on the bike carrier.

Preferably, the movable clamping members are coupled to each other by means of a first flexible tensile force transfer member and wherein the first flexible force transfer member is coupled to the movable clamping member by means of a second flexible force transfer member.

Preferably, the second force transmission arrangement comprises a linkage mechanism in which the input force is transferred by means of rigid links.

Preferably, the bike carrier is configured to be mounted on a supporting structure provided on a vehicle, preferably on a cross bar mounted on a vehicle.

### Brief description of the drawings

Figure 1 shows a perspective view of a configuration consisting of a cross bar and a bike carrier according to an embodiment.
Figure 2 shows a perspective view of a fixation unit as used in the bike carrier shown in Figure 1.
Figure 3 shows a sectional view of a section taken in longitudinal direction of the fixation unit.
Figure 4 shows a top view of components of a force transfer mechanism of a fixation unit of the bike carrier as shown in Figures 1 to 3.
Figure 5 shows a perspective view of a modified fixation unit.
Figure 6 shows a perspective view of components of an operating mechanism.
Figure 7 shows a top view of components of the operating mechanism shown in Figure 6.
Figure 8 shows an alternative configuration of an operating mechanism which is usable in the fixation unit as shown in Figure 5.
Figure 9 shows a further modification of a fixation unit in perspective view.
Figure 10 shows a perspective view of an interior structure of the fixation unit shown in Figure 9.
Figure 11 is a top view of components of the interior structure of the fixation unit shown in Figure 9.
Figure 12 shows components of a force transmission mechanism as used in the fixation unit shown in Figure 9.
Figure 13 shows a further modification of the fixation unit shown in Figure 10.
Figure 14 and Figure 15 show top views on the interior structure of components of the fixation unit of Figure 13.
Figure 16 shows an alternative fixation unit using the inventive concept.
Figure 17 shows a perspective view of an interior construction of an operating mechanism used in the fixation unit of Figure 16.
Figure 18 is a further perspective view of components of the mechanism shown in Figure 17.
Figure 19 is a plan view of components of the operating mechanism shown in Figures 17 and 18.
Figure 20 shows a force transmission mechanism as can be used in the fixation unit shown in Figure 5.
Figure 21 shows a state in which a quick release skewer type fork a thru axle type fork is mounted on a fixation unit of Figure 5.
Figure 22 shows a state in which a thru axle type fork is mounted on a fixation unit of Figure 5.

### Detailed description of embodiments

In the following, embodiments will be described with reference to the drawings. It is to be noted that similar elements in the drawings are denoted with the same reference signs.

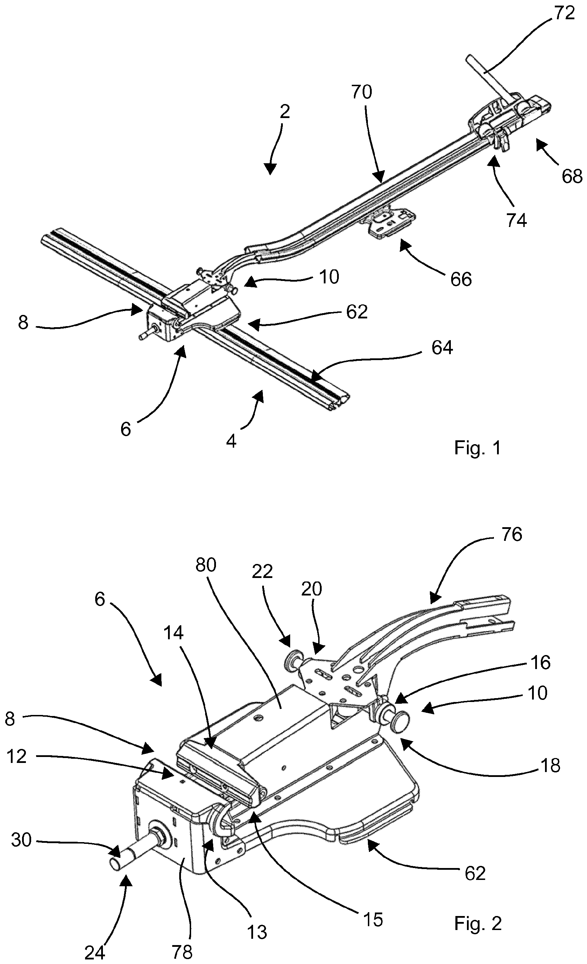

Figure 1 shows a perspective view of a bike carrier 2 which is mountable on a cross bar 4 which in turn is fixable on a corresponding supporting portion on a vehicle, the roof of the vehicle for example. The bike carrier 2 comprises an elongate supporting profile 70, a fixation unit 6 comprising a supporting portion 62 adapted to support the bike carrier 2 on the cross bar 4 as well as a further supporting portion 66 which is configured to support the bike carrier 2 on a further cross bar (not shown). As is further shown in Figure 1, the bike carrier 2 comprises a wheel fixation portion 68 which is adapted to fix a rear wheel of a bike on the supporting profile 70. The wheel fixation portion 68 comprises a strap 72 having teeth and a pump buckle 74 which is configured to receive a free end of the strap 72 for forming a loop for fixing the rear wheel of the bike on the supporting profile 70.

As is further shown in Figure 1, the fixation unit 6 is configured with two coexisting fixation options for different types of forks. More precisely, the fixation unit 6 comprises a first fixation mechanism 8 and a second fixation mechanism 10. The first fixation mechanism 8 and the second fixation mechanism 10 are spaced from each other in longitudinal direction of the bike carrier 2.

The first fixation mechanism 8 is configured to fix a thru axle type fork on the bike carrier 2 and the second fixation mechanism 10 is configured to fix a split end fork, i.e. a quick release skewer type fork comprising a split end, on the bike carrier 2. As already mentioned, the fixation unit 6 comprises a supporting portion 62 for supporting the fixation unit 6 against the cross bar 4. Although not shown, different ways are available for fixing the fixation unit 6 on the cross bar. For example, it is possible to use a T-shaped nut 64 provided on an upper end portion of the cross bar 4 for the fixation of the fixation unit 6 on the cross bar 4. Alternatively, it is possible to fix the fixation unit 6 on the cross bar 4 by means of a specifically shaped bracket (not shown) which is positioned so as to pass the cross bar 4 on a lower side and thus to form a counter element for clamping the fixation unit 6 on the cross bar 4.

The construction of the fixation unit 6 is shown in Figure 2 in greater detail. The first fixation mechanism 8 is provided at a forward end portion of the bike carrier 2. The first fixation mechanism 8 is of clamping type and comprises a stationary clamping member 12 and a movable clamping member 14. The stationary clamping member 12 and the movable clamping member 14 are configured such that they can clamp a thru axle of a thru axle type fork between the same. For that, the stationary clamping member 12 and the movable clamping member 14 are shaped such that at least a contact portion of the same is designed corresponding to an outer contour of the thru axles that are to be accommodated between them and are in particular designed such that thru axles of different diameters can be securely clamped between both members. In order to provide a secure fixation, the stationary clamping member and/or the movable clamping member can comprise pad portions 13, 15 that are made of a resilient material such as rubber. In the embodiment as shown in Figure 2, the stationary clamping member 12 is supported on a base portion 78 of the fixation unit 6. The movable clamping member 14 is arranged movable with respect to the base portion 78 and is in particular guided within a cover portion 80 provided on the base portion 78. In the embodiment, the movable clamping member 14 is arranged movable in a longitudinal direction of the bike carrier 2 so that a movement of the movable clamping member 14 towards and away from the stationary clamping member 12 is possible.

The second fixation mechanism 10 comprises two stationary clamping members 16 and 20 and two movable clamping members 18 and 22. The stationary clamping members 16, 20 are fixedly coupled to the base portion 78. One stationary clamping member and one movable clamping member are configured to cooperate with each other such that a split end of a fork can be clamped between the same. The stationary clamping members 16, 20 and the movable clamping members 18, 22 are arranged on opposite lateral sides of the bike carrier 2 in longitudinal direction of the bike carrier 2. Both stationary clamping members 16, 20 and movable clamping members 18, 22 are positioned on the same vertical height when the bike carrier 2 is mounted on a vehicle.

As is further shown in Figure 2, the fixation unit 6 comprises a mounting portion 76 which is configured to be coupled to the supporting profile 70. On an opposite longitudinal end of the fixation unit 6, an operating member 30 of an operating mechanism 24 is shown and embodied as a rotationally movable shaft.

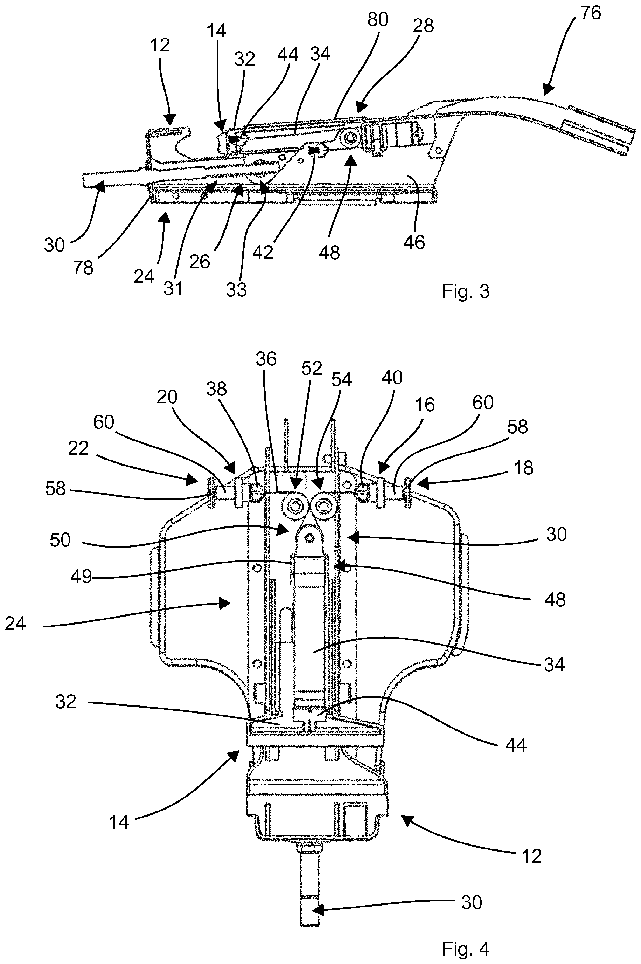

Figure 3 shows a sectional view of the fixation unit 6 shown in Figure 2. More precisely, the sectional view as presented in Figure 3 is taken in longitudinal direction of the bike carrier 2. Besides the elements and members of the fixation unit 6 as described so far, a first force transmission arrangement 26 and a second force transmission arrangement 28 are shown in Figure 3 that are used to drive the first fixation mechanism 8 and the second fixation mechanism 10. The first force transmission arrangement 26 is configured to transfer a rotational input force applied on the operating member 30 into a translatory movement of the clamping member 32. For that, the first force transmission arrangement 26 comprises a threaded portion 31 on the shaft 30 which is engaged with a pin 33 having a threaded opening. The pin 33 is fixed to a carrier 32 in such a manner that it is pivotable but not translatory movable with respect to the carrier 32. As is also shown in Figure 3, the carrier 32 carries the movable clamping member 14. With such an arrangement, a rotation of the shaft 30 leads to a translatory movement of the carrier 32 and consequently of the movable clamping member 14. In order to also transfer an input force to the second fixation mechanism 10, the fixation unit 6 comprises a second force transmission arrangement 28. The second force transmission arrangement 28 basically comprises two metal straps 34, 36 the ends of which being fixed to specific portions in the fixation unit 6 and guide rolls 48, 50, 52, 54 for deflecting the metal straps 34 and 36.

The detailed configuration of the second force transmission arrangement 28 can be gathered from a combined consideration of Figures 3 and 4. A first end of a metal strap 34 is coupled to the carrier 32 by means of an anchor portion 44. Accordingly, a movement of the carrier 32 and consequently of the movable clamping member 14 leads to a movement of the anchor portion 44 coupling one end of the metal strap 34 to the carrier 32. A second end of the metal strap 34 is fixedly mounted to a supporting structure 46 by means of an anchor portion 42. A guide roll 48 is provided such that the same is movable about a pivot axis which in the shown configuration extends substantially horizontally when the bike carrier 2 is mounted on a vehicle. The metal strap 34 is arranged such that it extends from the anchor portion 44 towards the guide roll 48, passes the guide roll 48 on an upper portion and goes around about 180° and then extends back in forward direction of the bike carrier 2 up to the anchor portion 42. With such a configuration, a movement of the anchor portion 44 about a specific distance moves the pivot axis of the guide roll 48 only by half of the predetermined distance. On the other hand, a force which is applied on the anchor portion 44, that is a tensile force introduced into the metal strap 34, is amplified in that arrangement such that the force available on the guide roller 48 is doubled.

As is indicated in Figure 4, the guide roll 48 is coupled to a coupling member 49. The coupling member 49 pivotably supports the guide roll 48 and furthermore pivotably supports a further guide roll 50 which is arranged such that the pivot axis of the guide roll 50 is substantially perpendicular to the pivot axis of the guide roll 48. Accordingly, a movement of the guide roll 48 leads to a corresponding movement of the guide roll 50. The guide roll 50 is configured to drive the second fixation mechanism 10 by means of a further metal strap 36. The metal strap 36 comprises two ends that are fixed to respective movable clamping members 18 and 22 in order to move the same with respect to the stationary clamping members 16, 20.

The movable clamping members 18, 22 comprise a cylindrical portion 60 and a head portion 58. The cylindrical portion 60 comprises an outer diameter which allows to accommodate a split end of a fork prong thereon. The head portion 58 is provided on a lateral outer side on an end portion of the cylindrical portion 60 and comprises an outer diameter which is such that the split end of the fork cannot pass the head portion 58 with a relative movement of the movable clamping members in axial direction of the cylindrical portion 60. Furthermore, the ends of the metal strap 36 are coupled to ends of the cylindrical portions 60 that are opposite to the ends where the head portions 58 are provided by means of anchor portions 38, 40. The metal strap 36 is arranged to form a loop between two stationary guide rolls 52, 54. The stationary guide rolls 52, 54 are arranged such that the metal strap 36 extends substantially in the same direction as the cylindrical pins 60 of the movable clamping members 18, 22 from the anchor portions 38, 40 to a contact portion of the metal strap 36 with the guide rolls 52, 54. The guide roll 50 is arranged in the loop formed by the metal strap 36 between the guide rolls 52, 54. Rotational axes of the guide rolls 50, 52, 54 are thus located on tips of an imaginary triangle when viewed as shown in Figure 4.

As described above, a movement of the guide roll 50 is coupled to a movement of the guide roll 48. By moving the guide roll 50 away from the guide rolls 52, 54, i.e. towards the front end of the bike carrier 2, the movable clamping members 18, 22 are moved towards each other. Accordingly, the head portions 58 are moved towards stationary clamping members 16, 20. The stationary clamping members 16, 20 are exemplified as hollow cylindrical elements having an opening through which the cylindrical portions 60 are passed such that the head portions 58 and the anchor portions 38, 40 are provided on opposite sides of the stationary clamping members 16, 20.

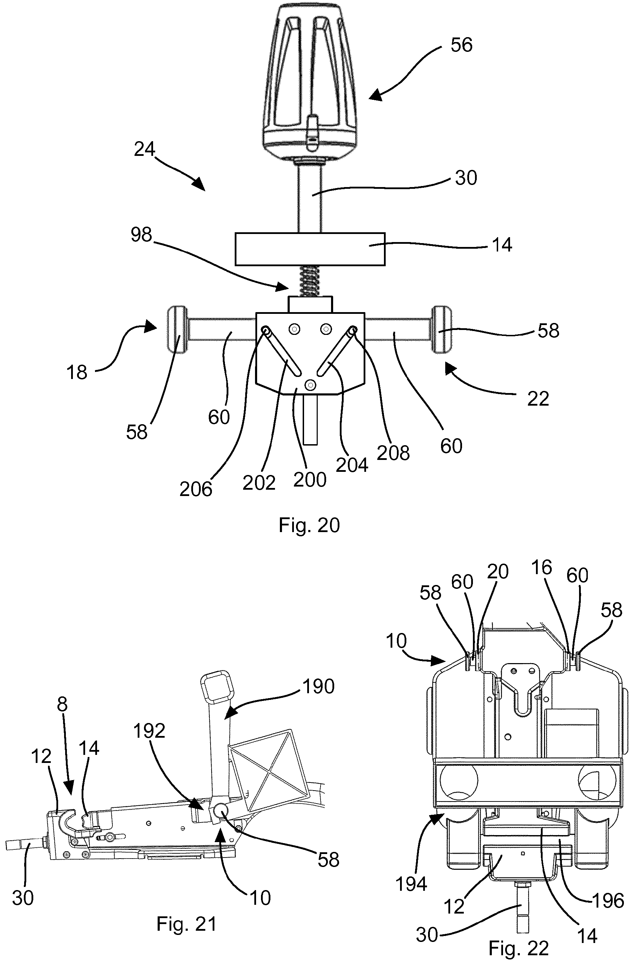

With this configuration, a split end of a fork can be clamped between the head portions 58 and the stationary clamping members 16, 20 as is shown in Figure 21. Figure 21 shows a fork prong 190 having a split end 192 arranged on the cylindrical portion 60 of the movable clamping member 18. Figure 21 shows a state, in which the split end 192 is fixedly clamped between the head portion 58 and the stationary clamping member 16. The other split end of the other fork prong is clamped in the same manner between head portion 58 of movable clamping member 22 and the stationary clamping member 20 although this is not shown in Figure 21. Since the movable clamping members 18, 22 are driven by the above mentioned metal strap 36, a clamping force is equally distributed to the movable clamping members so that both split ends are clamped with the same clamping force.

As is further shown in Figure 21, the movable clamping member 14 of the first clamping mechanism does not abut against a further element in this state of the fixation unit 6. No thru axle is provided in the first fixation mechanism 8 so that all the force input via the operating member 30 is available in the second fixation mechanism 10. The first fixation mechanism 8 thus does not influence the operation of the second fixation mechanism 10.

On the other hand, Figure 22 shows a state of the fixation unit 6 as shown in Figures 3 and 4 in which a thru axle 196 of a thru axle type fork 194 is clamped in the first fixation mechanism 8 and no split ends 192 of a quick release skewer type fork are clamped by the second fixation mechanism 10. The second fixation mechanism 10 is configured such that the head portions 58 and the stationary portions 20 do not contact each other even if thru axles 196 of different typical diameters are clamped in the first fixation unit 8. Accordingly, the second fixation mechanism 10 is configured such that the function of the first fixation mechanism 8 is not influenced over a predetermined movement range of the movable clamping member 14 so that all of the force input via the operating member 30 is available at the first fixation mechanism 8.

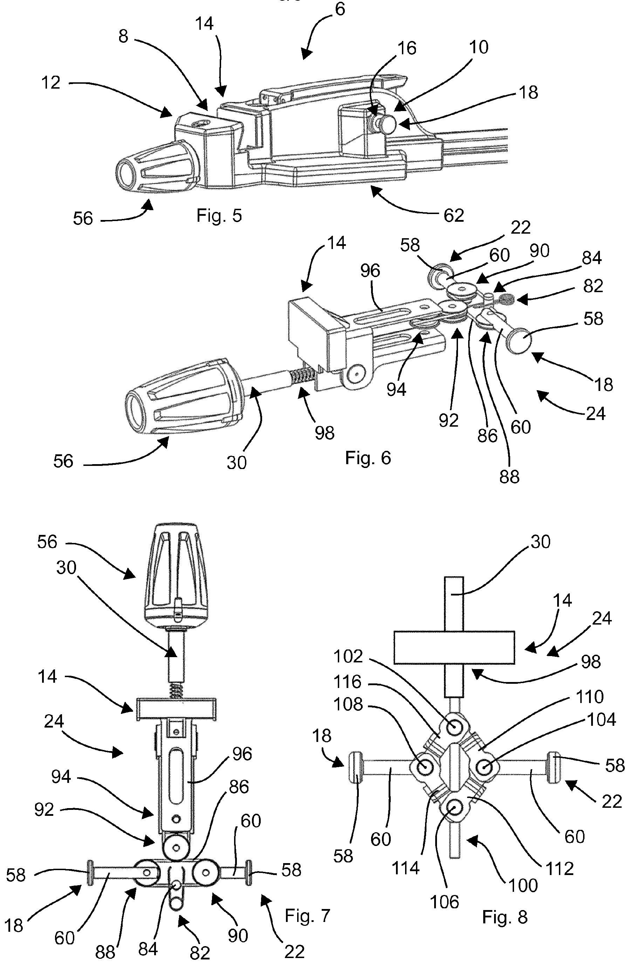

Figure 5 shows a perspective view of a modified fixation unit 6. A basic construction of the fixation unit 6 as shown in Figure 5 corresponds to the one shown in Figure 2. Again, the fixation unit 6 is configured with two coexisting fixation options for different types of forks. The fixation unit 6 comprises a first fixation mechanism 8 and a second fixation mechanism 10. The first fixation mechanism 8 and the second fixation mechanism 10 are spaced from each other in longitudinal direction of the bike carrier 2. The first fixation mechanism 8 is configured to fix a thru axle type fork on the bike carrier 2 and the second fixation mechanism 10 is configured to fix a split end fork on the bike carrier 2.

The fixation unit 6 comprises a supporting portion 62 for supporting the fixation unit 6 against a cross bar 4 as shown in Figure 1. The first fixation mechanism 8 is provided on a forward end portion of the bike carrier 2 and of the fixation unit 6. The clamping principles of the first fixation mechanism 8 and the second fixation mechanism 10 correspond to the ones described before. The first fixation mechanism 8 has a similar construction to the one described with respect to the fixation mechanism 8 of Figure 2. It comprises a stationary clamping member 12 and a movable clamping member 14 which are adapted to clamp a thru axle of a thru axle type fork between the same. A construction of the stationary clamping member 12 and the movable clamping member 14 can be similar or identical to the construction as described in connection with Figure 2.

The basic function of the second fixation mechanism 10 of the fixation unit 6 as shown in Figure 5 also corresponds to the basic construction and function of the second fixation mechanism 10 as described in connection with Figure 2. The main difference between the fixation unit 6 as shown in Figure 5 and the fixation unit 6 as shown in Figure 2 resides in differences in the operating mechanism 24 for driving the first fixation mechanism 8 and the second fixation mechanism 10.

An embodiment of an operating mechanism 24 of the modified fixation unit 6 of Figure 5 will be described with reference to Figures 6 and 7. In Figure 6 and Figure 7, a first example of a modified operating mechanism 24 is shown. In Figure 8, a further embodiment of a modified operating mechanism 24 is shown. Contrary to the operating mechanism 24 as described with reference to Figures 3 and 4, the modified operating mechanism 24 as shown in Figures 6 and 7 uses a wire 86 instead of the metal straps for transferring a force to the second fixation mechanism 10. Similar to the construction of the operating mechanism shown in Figures 3 and 4, the operating mechanism 24 comprises an operating member 30 in the form of a shaft having a threaded portion 98. An operating knob 56 is coupled to the operating member 30 in order to allow a user to rotatate the operating member 30. Such an operating knob may also be provided on the operating member 30 as shown in Figures 2, 3 and 4. The threaded portion 98 is in engagement with a threaded opening provided in a pin the is in turn mounted on a movable carrier 96 that carries the movable member 14. Accordingly, a rotation of the operating member 30 is transferred into a translatory movement of the carrier 96 and thus of the movable clamping member 14.

In order to transfer a force to the movable clamping members 18, 22, the operating mechanism comprises a system having wire 86 and pulleys 88, 90, 92, 94 for guiding the wire 86 in a desired manner. On each laterally inner end of the movable clamping members 18, 22, a pulley 88, 90 is rotatably held with a rotational axis being oriented in vertical direction. Each pulley 88, 90 is translatory movable integral with the movable clamping members 18, 22. A further pulley 92 is mounted stationary in the fixation unit 6 such that its rotational axis extends in vertical direction and is located between the rotational axes of the pulleys 88, 90.

As can be gathered from Figure 6, the pulley 92 comprises two guiding grooves that are offset with respect to each other in vertical direction. Each of the pulleys 88, 90 comprises a guiding groove and the pulleys 88, 90 are arranged at different height and in such a manner that one guiding groove in the pulley 92 is located on the same height as one guiding groove of one of the pulley 88, 90. In the embodiment, the upper guiding groove in the pulley 92 is assigned to pulley 90 and is therefore located at the same height as the guiding groove in the pulley 90. The lower guiding groove in the pulley 92 is assigned to the pulley 88 and is therefore located at the same height as the guiding groove in the pulley 88.

The pulley 92 and the pair of pulleys 88, 90 are arranged offset with respect to each other in longitudinal direction of the bike carrier 2 and the fixation unit 6. A further pulley 94 is arranged on the carrier 96. All pulleys are arranged such that their axes are parallel with each other. Furthermore, the pulley 92 is arranged between the pulley 94 and the pair of pulleys 88, 90 in longitudinal direction of the fixation unit 6 or bike carrier 2. Since the pulley 94 is coupled to the carrier 96, it is integrally movable with the carrier 96 towards and away from the stationary pulley 92. The pulley 94 comprises a wide guiding groove that comprises substantially double the width of each guiding groove of the pulley 92. The pulley 94 is arranged at a height such that the wide guiding groove is assigned to both guiding grooves in the pulley 92.

The wire 86 is wound around the pulleys in the manner shown in Figures 6 and 7. The free ends of the wire 86 are coupled to each other at a coupling portion 84 embodied as a cylindrical pin held between free ends of an urging member 82 embodied as a spring. The urging member 82 is configured to urge the coupling portion 84 towards the longitudinal centre of the fixation unit 6. Starting from the coupling portion 84, the wire 86 extends about the pulley 88 associated with the movable clamping member 18 about 180 degrees. After that, the wire 86 extends about 90 degrees about the pulley 92 in the lower guiding groove of the pulley 92. The wire then extends towards the pulley 94 and contacts the same in a lower portion of the wide guiding groove of the pulley 94. In the wide guiding groove, the wire 86 extends about 180 degrees and into a vertical upper portion of the wide guiding groove such that it leaves the pulley 94 at a heigt corresponding to the height at which the upper guiding groove of the pulley 92 is located. The wire then passes along the upper guiding groove of the pulley 92 for about 90 degrees and extends further to the pulley 90 provided on the movable clamping member 22. The wire 86 contacts the pulley 90 for about 180 degrees and then extends to the coupling portion 84. With this configuration, a movement of the pulley 94 in the longitudinal direction of the fixation unit 6 or bike carrier 2 leads to a movement of the movable clamping members 18, 22 towards and away from each other. Accordingly, by operating the operating member 30, the movable clamping member 14 and the movable clamping members 18, 22 are driven simultaneously.

A modification of the force transfer mechanism of Figures 6 and 7 is shown in Figure 8. Instead of using a wire and pulleys for the force transfer, the solution according to Figure 8 uses a rod with different threaded portions 98, 100 as an operating member 30. A first threaded portion 98 of the rod is operatively coupled to the movable clamping member 14 in a similar manner as the one described with respect to Figures 6 and 7, i.e. by means of an engagement with a thread opening of a pin. A second threaded portion 100 is engaged with threaded openings in pivot pins 102, 106 of a linkage mechanism. The pivot pins are arranged at a predetermined distance from each other and the threaded portion 100 is configured such that a rotation of the rod leads to a movement of the pivot pins 102, 106 towards or away from each other depending on the rotation direction of the rod. Further pivot pins 104, 108 are coupled to the laterally inner ends of the movable clamping members 18, 22. The pivot pins 102, 104, 106, 108 are arranged with their axes of rotation being oriented parallel with respect to each other. Pivot pin 102 which is the pivot pin 102 that is arranged nearest to the threaded portion 98 for driving the movable clamping member 14 is coupled to pivot pins 104, 108 by means of rigid links 110, 116. The rigid link 110 is pivotably coupled to the pivot pin 102 at one end and is pivotably coupled to the pivot pin 104 at its other end. The rigid link 116 is pivotable coupled to pivot pin 102 at one end and pivotably coupled to the pivot pin 108 at its other end. Pivot pin 106 which is the pivot pin 106 that is arranged farthest to the threaded portion 98 for driving the movable clamping member 14 is coupled to pivot pins 104, 108 by means of rigid links 112, 114. The rigid link 112 is pivotably coupled to the pivot pin 106 at one end and is pivotably coupled to the pivot pin 104 at its other end. The rigid link 114 is pivotable coupled to pivot pin 106 at one end and pivotably coupled to the pivot pin 108 at its other end. Accordingly, a linkage mechanism is provided in which the pivot pins 104, 108 are movable towards and away from each other by moving the pivot pins 102, 106 towards and away from each other by rotation of the rod. In this way, a reliable operating mechanism 24 is provided.

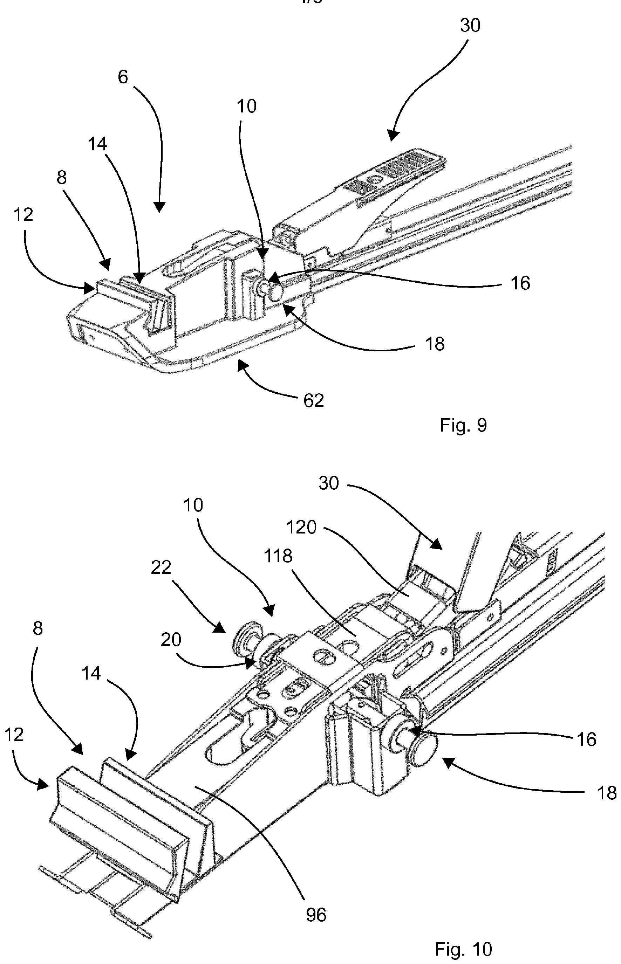

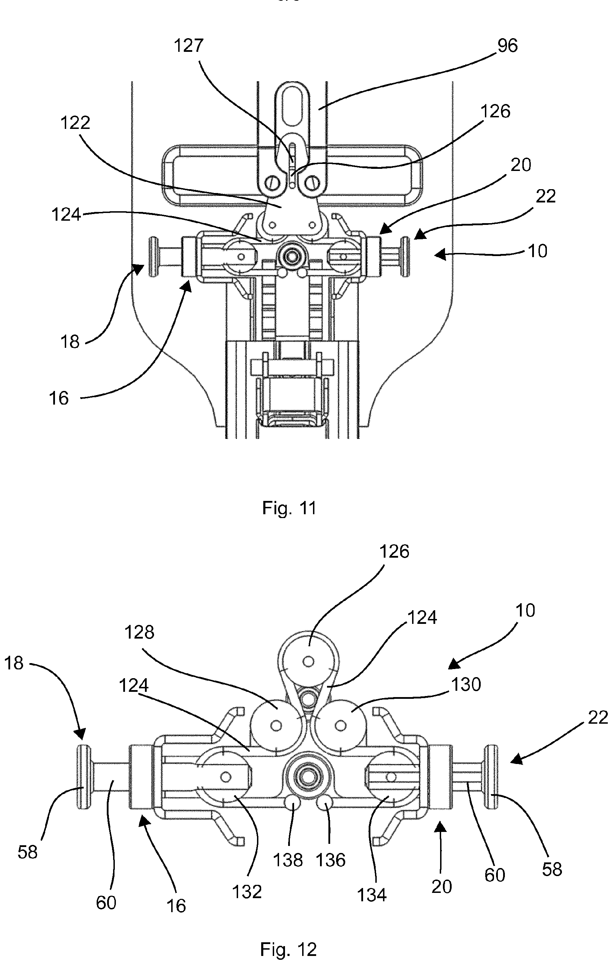

Figures 9 to 12 show a further modification of fixation unit 6. Elements and members that are designated with the same reference signs correspond to the ones already described before. In this modification, the operating member 30 is embodied as a lever. The lever is configured to generate a force acting in longitudinal direction of the fixation unit 6. The lever is force transmittingly coupled to a force transfer member 118 by means of a link 120 in order to move the force transfer member 118 in the longitudinal direction of the fixation unit 6. The force transfer member 118 is coupled to the carrier 96 which is in turn coupled to the movable clamping member 14 so as to be integrally movable with the same. Accordingly, a force generated by the lever is directly transferred to the movable clamping member 14. As is shown in Figures 11 and 12, a wire 124 is used to transfer a force from the carrier 96 to the movable clamping members 18, 22. The mechanism comprises several pulleys 126, 128, 130, 132, 134 having guiding grooves that are all located on the same height. Furthermore, the rotational axes of the pulleys are parallel with each other and extend in vertical direction. Pulleys 132, 134 are arranged on the laterally inner end of the movable clamping members 18, 22 respectively. The movable clamping members 18, 22 are arranged at the same longitudinal position of the fixation unit 6. Pulleys 128, 130 are rotatably fixed to a stationary supporting member 122 at the same longitudinal position of the fixation unit 6. Pulley 126 is movably guided in a slot 126 extending in longitudinal direction of the bike carrier 2 or fixation unit 6 and coupled to the carrier 96 so as to be integrally movable with the same. Accordingly, a movement of the carrier 96 leads to a movement of the pulley 126 in longitudinal direction of the fixation unit 6 or bike carrier 2. A first end portion 136 of the wire 124 and a second end portion 138 of the wire 124 are fixed to a stationary part of the fixation unit 6 and are thus stationary. The wire is wound about the pulleys such that a movement of the pulley 126 in longitudinal direction of the bike carrier 2 leads to a movement of the pulleys 132, 134 towards and away from each other. Again, loop is formed between stationary pulleys 128, 130 and movable pulley 126 is arranged within the loop similar to the arrangement as shown in Figure 4 with the difference that the ends of the wire are not coupled to the movable clamping members. However, that would also be possible. In this connection, it is to be noted that in all embodiments using a tensile force transmission element like a wire or a metal band, a return spring or other urging member can be provided for urging the movable clamping members 18, 22 towards an open state, i.e. a state in which the head portions 58 are moved away from the stationary clamping members 16, 20.

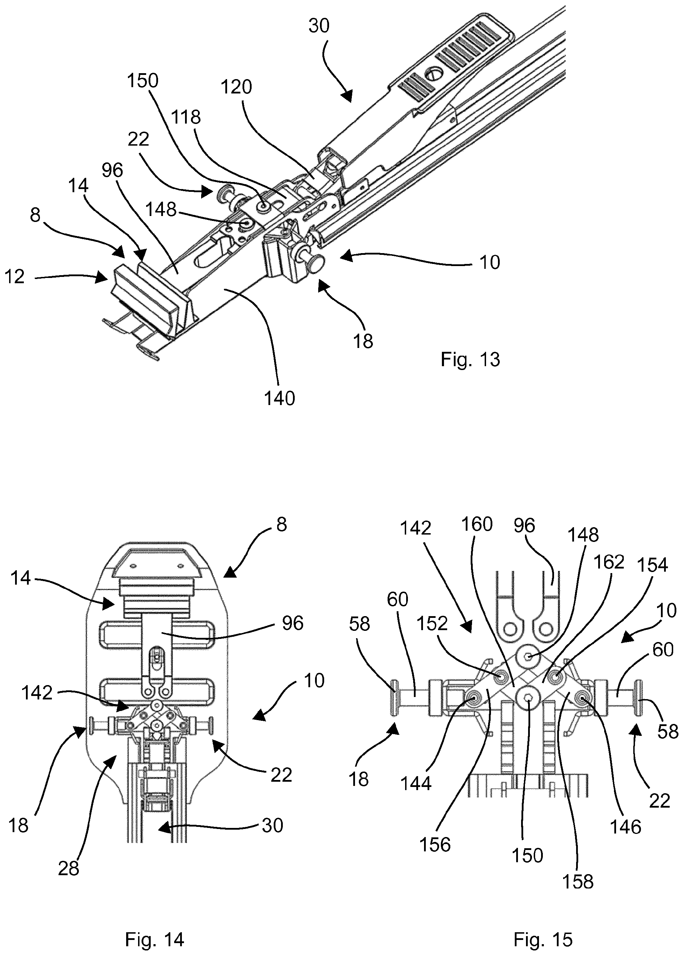

Figures 13, 14 and 15 show a modification of the fixation unit 6 of Figure 9. Instead of a mechanism using a wire and pulleys, the drive mechanism 142 according to the modification comprises rigid links or connecting links 156, 158, 160, 162 for transferring a force from the force transfer member 118 to the movable clamping members 18, 22. The connecting link 156 is coupled to a pivot 148 at a first end and to the laterally inner end of the movable clamping member 18 at its other end by means of a pivot 144. The connecting link 158 is coupled to the pivot 148 at a first end and to the laterally inner end of the movable clamping member 22 at its other end by means of a pivot 146. The connecting link 160 is coupled to a pivot 150 at a first end and pivotably coupled to the connecting link 156 at its other end at a pivot 152 between the ends of the connecting link 156. The connecting link 162 is coupled to a pivot 150 at a first end thereof and pivotably coupled to the connecting link 158 at its other end at a pivot 154 between the ends of the connecting link 158. The pivot 150 is arranged stationary on a portion of a housing 140 as is shown in in Figure 13. The pivot 148 is coupled to the force transfer member 118 so as to be integrally movable with the same. The force transfer member 118 is integrally movable with the carrier 96 so that a movement of the carrier 96 leads to a movement of the pivot 148. Therefore, when the carrier 96 moved in forward direction of the fixation unit 6 or bike carrier 2 for driving the movable member 14, the pivot 148 is moved while the pivot 150 remains stationary. This leads to a movement of the pivots 144, 146 towards and away from each other depending on the movement direction of the pivot 148 in longitudinal direction of the fixation unit 6 or bike carrier 2.

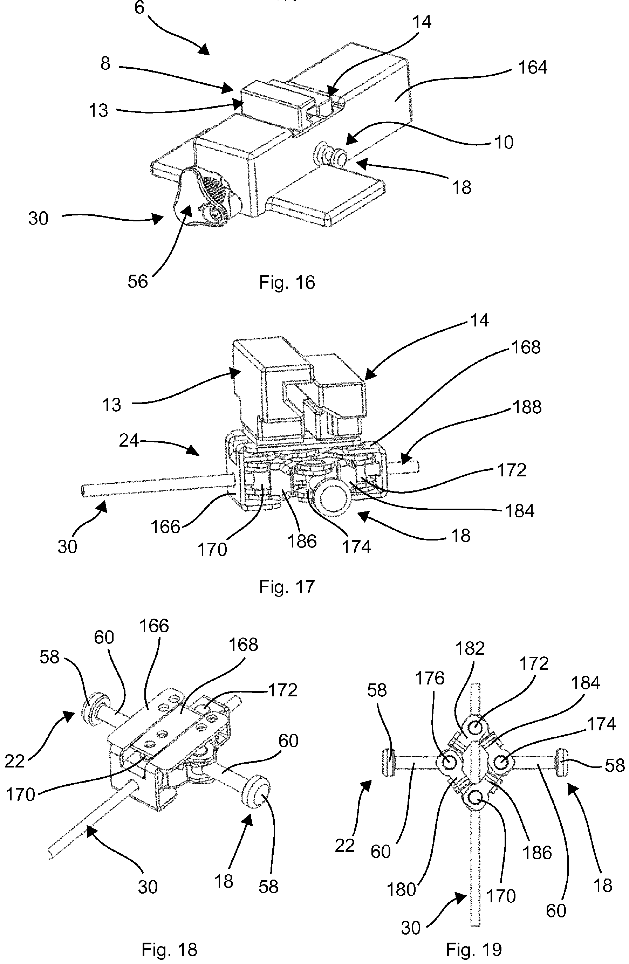

A further modification of the fixation unit 6 is shown in Figures 16 to 19. Instead of a stationary clamping member 12, the modification comprises two movable clamping members 13, 14 in the first fixation mechanism. Furthermore, the first fixation mechanism 8 is provided vertically above the second fixation mechanism 10. The operating mechanism comprises a linkage mechanism which is similar to the one shown in Figur 8 with the difference that according to the modification, both of the fixation mechanisms 8, 10 are driven by the same linkage mechanism. As is best shown in Figure 19, the operating mechanism 24 according to the modification comprises an operating member 30 operable by an operating knob 56. The operating member 30 comprises a threaded portion 188 which is engaged with threaded openings in pivot pins 170, 172 of a linkage mechanism. The pivot pins 170, 172 are arranged at a predetermined distance from each other and the threaded portion is configured such that a rotation of the operating member 30 leads to a movement of the pivot pins 170, 172 towards or away from each other depending on the rotation direction of the operating member 30. Further pivot pins 174, 176 are coupled to the laterally inner ends of the movable clamping members 18, 22. The pivot pins 170, 172, 174, 176 are arranged with their axes of rotation being oriented parallel with respect to each other and in vertical direction. Pivot pin 170 is coupled to pivot pins 174, 176 by means of rigid links 180, 186. The rigid link 180 is pivotably coupled to the pivot pin 170 at one end and is pivotably coupled to the pivot pin 176 at its other end. The rigid link 186 is pivotable coupled to pivot pin 170 at one end and pivotably coupled to the pivot pin 174 at its other end. Pivot pin 172 is coupled to pivot pins 174, 176 by means of rigid links 182, 184. The rigid link 182 is pivotably coupled to the pivot pin 172 at one end and is pivotably coupled to the pivot pin 176 at its other end. The rigid link 184 is pivotable coupled to pivot pin 172 at one end and pivotably coupled to the pivot pin 174 at its other end. Accordingly, a linkage mechanism is provided in which the pivot pins 174, 176 are movable towards and away from each other by moving the pivot pins 170, 172 towards and away from each other by rotation of the operating member 30. In this way, a reliable operating mechanism 24 is provided and the movable clamping members 18, 22 are operable in a similar manner as described with respect to the mechanism shown in Figure 8.

The movable clamping member 14 is fixedly mounted on a first supporting member 166. The movable clamping member 13 is fixedly mounted on a second supporting member 168. The supporting members 166, 168 are arranged movable in such a manner that the movable clamping members 13, 14 are movable towards and away from each other. The first supporting member 166 is coupled to the pivot pin 170 and thus integrally moved with the same. The second supporting member 168 is coupled to the pivot pin 172 and thus integrally moved with the same. The supporting member 166 is configured to support the movable clamping member 14 near the pivot pin 172 and the supporting member 168 is configured to support the movable clamping member 13 near pivot pin 170. For that, the supporting members comprise supporting portions extending in longitudinal direction of the bike carrier 2 from their respective coupling portions to the pivot pins in longitudinal direction towards the other pivot pins. The first fixation mechanism 8 and the second fixation mechanism 10 are coupled so as to be simultaneously operated. In the present modification, a rotation of the operating member 30 in a direction moving the pivot pins 170, 172 away from each other leads to a movement of the movable clamping members 18, 22 towards each other so that the second fixation mechanism 10 is operated towards clamping state. Since the movement of the pivot pins 170, 172 is also linked to the movable clamping members 13, 14 in the above described way, the movable clamping members are also moved towards each other and thus also operated towards clamping state.

A further modification of the operating mechanism 24 usable in a fixation unit 6 as shown in Figure 5 is illustrated in Figure 20. The operating mechanism 24 comprises an operating member 30 embodied as a rod which can be rotated using the operating knob 56. The rod comprises a threaded portion 98 which is coupled to the movable member 14 and to a force transfer mechanism for driving the second fixation mechanism 10. The force transfer mechanism comprises a guiding plate 200 having two guiding slots 202, 204 that are arranged in a substantially horizontal plane and inclined with respect to the longitudinal direction of the fixation unit 6 or bike carrier 2. Guiding pins 206, 208 are fixedly coupled to the laterally inner ends of the movable clamping members 18, 22 in such a manner that they are accommodated in the guiding slots 202, 204. As is shown in Figure 20, the guiding pins 206, 208 are guided in the guiding slots 202, 204 such that a movement of the guiding plate 200 leads to a movement of the guiding pins 206, 208 towards and away from each other depending on the movement direction of the guiding plate 200. In the embodiment, a movement of the guiding plate 200 in forward direction of the fixation unit 6 or bike carrier 2 leads to a movement of the movable clamping members 18, 22 towards each other and vice versa. As in all embodiments using a rotatable rod or operating member, the operating member is mounted in the fixation unit such that it is not translatory movable. For that, the operating member 30 can be configured with a protrusion abutting against base portion 78 as indicated in Figure 3. With the latter mechanism, a rotation of the operating member drives all of the movable clamping members 14, 18, 22 towards the same state.

## Claims

1. Bike carrier (2) comprising a fixation unit (6) adapted to fix a fork of a bike to said bike carrier (2), **characterized in that** said fixation unit (6) comprises a first fixation mechanism (8) and a second fixation mechanism (10) provided at different positions of the bike carrier (2) and providing two coexisting fixation options for mounting a fork to said bike carrier (2).

2. Bike carrier (2) according to claim 1, wherein said fixation unit (6) is configured such that a fixation of a thru axle type fork and a fixation of a quick release skewer type fork are simultaneously available.

3. Bike carrier (2) according to claim 1 or 2, wherein said fixation unit (6) is configured such that one or each fixation option is a clamp type fixation option, and/or wherein said first fixation mechanism (8)is for mounting said thru axle type fork by clamping a thru axle of said thru axle type fork, and said second fixation mechanism (10) is configured to clamp said quick release skewer type fork.

4. Bike carrier (2) according to claim 3, wherein said first fixation mechanism (8) and said second fixation mechanism (10) are spaced from each other in longitudinal and/or vertical direction of the bike carrier (2), or are spaced from each other in such a manner that said first fixation mechanism (8) and said second fixation mechanism (10) are vertically aligned.

5. Bike carrier according to one of claims 3 and 4, wherein said fixation unit (6) comprises operating mechanisms for individually operating said first fixation mechanism (8) and said second fixation mechanism (10).

6. Bike carrier (2) according to one of claims 3 and 4, wherein said fixation unit (6) comprises an operating mechanism (24) configured to simultaneously operate said first fixation mechanism (8) and said second fixation mechanism (10).

7. Bike carrier (2) according to claim 6, wherein said operating mechanism (24) is configured to transfer an input force to said first fixation mechanism (8) and said second fixation mechanism (10), preferably such that the entire input force is transferred to an active fixation mechanism (8, 10) of said first fixation mechanism (8) and said second fixation mechanism (10), said active fixation mechanism being the one of the fixation mechanisms at which said fork is to be mounted.

8. Bike carrier (2) according to claim 7, wherein said operating mechanism (24) comprises a first force transmission arrangement (26) for transferring an input force from an operating member (30) to said first fixation mechanism (8) and a second force transmission arrangement (28) for transferring an input force to said second fixation mechanism (10).

9. Bike carrier (2) according to claim 8, wherein said first force transmission arrangement (26) is configured to transfer an input force input via said operating member (30), preferably a rotational input force, into a translatory, preferably sliding, or pivoting movement of a movable clamping member (32) of said first fixation mechanism (8) and wherein said second force transmission arrangement (28) is configured to transfer a movement of said clamping member (32) into a movement of movable clamping members (18, 22), preferably a translatory movement of said movable clamping members (18, 22), of said second fixation mechanism (10), wherein said movable clamping members (18, 22) of said second fixation mechanism (10) are preferably shaped as mushroom like portions.

10. Bike carrier (2) according to claim 9, wherein said second force transmission arrangement (28) is configured to provide a force amplification, preferably with a ratio of 1:2, such that a clamping force available at each of said movable clamping members (18, 22) of said second fixation mechanism (10) corresponds to a clamping force available at said movable clamping member (32) of said first fixation mechanism (8) and/or wherein a movement direction of said movable clamping member (32) of said first fixation mechanism (8) is perpendicular to a movement direction of said movable clamping members (18, 22) of said second fixation mechanism (10).

11. Bike carrier (2) according to one of claims 8 to 10, wherein said second force transmission arrangement (28) comprises a flexible tensile force transfer member for transferring a force, preferably a wire or a metal strap (34, 36) which can be made of stainless steel and can comprise anchor portions (38, 40, 42, 44), preferably made of zink, on their respective ends, said anchor portions (38, 40, 42, 44) being available for coupling said force transfer members to said clamping members (18, 22, 32) or a supporting portion (46) on said bike carrier (2), wherein said metal straps (34, 36) preferably comprise grooves, protrusions or through-holes for mechanically coupling the same to said anchor portions (38, 40, 42, 44).

12. Bike carrier (2) according to claim 11, wherein said second force transmission arrangement (28) comprises guiding members (48, 50, 52, 54), preferably guide rolls (48, 50, 52, 54), for deflecting said flexible tensile force transfer member, wherein said guiding members (48, 50, 52, 54) are preferably configured as low friction guiding members (48, 50, 52, 54) with bearings for supporting the same with respect to the bike carrier (2) and/or wherein said movable clamping members (18, 22) are coupled to each other by means of a first flexible tensile force transfer member (36) and wherein said first flexible force transfer member (36) is coupled to said movable clamping member (32) by means of a second flexible force transfer member (34).

13. Bike carrier (2) according to one of claims 8 to 10, wherein said second force transmission arrangement comprises a linkage mechanism in which said input force is transferred by means of rigid links.

14. Bike carrier (2) according to one of claims 6 to 13, wherein said operating mechanism (24) is configured such that said first fixation mechanism (8) and said second fixation mechanism (10) are coordinated such that each of said first fixation mechanism (8) and said second fixation mechanism (10) is operable within a predetermined movement range without interfering with the function of the other one of said fixation mechanisms (8, 10).

15. Bike carrier (2) according to one of the preceding claims, wherein said bike carrier (2) is configured to be mounted on a supporting structure provided on a vehicle, preferably on a cross bar (4) mounted on a vehicle.

## Patentansprüche

1. Fahrradträger (2), umfassend eine Befestigungseinheit (6), die zum Befestigen einer Fahrradgabel an dem Fahrradträger (2) geeignet ist, **dadurch gekennzeichnet, dass** die Befestigungseinheit (6) einen ersten Befestigungsmechanismus (8) und einen zweiten Befestigungsmechanismus (10) umfasst, die an unterschiedlichen Positionen des Fahrradträgers (2) vorgesehen sind und zwei gleichzeitig vorhandene Befestigungsmöglichkeiten zur Anbringung einer Gabel an dem Fahrradträger (2) bereitstellen.

2. Fahrradträger (2) nach Anspruch 1, wobei die Befestigungseinheit (6) derart ausgestaltet ist, dass eine Befestigung einer Gabel vom Typ Steckachse und eine Befestigung einer Gabel vom Typ Schnellspanner gleichzeitig verfügbar sind.

3. Fahrradträger (2) nach Anspruch 1 oder 2, wobei die Befestigungseinheit (6) derart ausgestaltet ist, dass eine oder jede Befestigungsmöglichkeit eine Befestigungsmöglichkeit vom Klemmtyp ist, und/oder wobei der erste Befestigungsmechanismus (8) zur Anbringung der Gabel vom Typ Steckachse durch Klemmen einer Steckachse der Gabel vom Typ Steckachse dient und der zweite Befestigungsmechanismus (10) zum Klemmen einer Gabel vom Typ Schnellspanner ausgestaltet ist.

4. Fahrradträger (2) nach Anspruch 3, wobei der erste Befestigungsmechanismus (8) und der zweite Befestigungsmechanismus (10) in Längs- und/oder Vertikalrichtung des Fahrradträgers (2) voneinander beabstandet sind oder derart voneinander beabstandet sind, dass der erste Befestigungsmechanismus (8) und der zweite Befestigungsmechanismus (10) vertikal zueinander ausgerichtet sind.

5. Fahrradträger nach einem der Ansprüche 3 und 4, wobei die Befestigungseinheit (6) Betätigungsmechanismen zum individuellen Betätigen des ersten Befestigungsmechanismus (8) und des zweiten Befestigungsmechanismus (10) umfasst.

6. Fahrradträger (2) nach einem der Ansprüche 3 und 4, wobei die Befestigungseinheit (6) einen Betätigungsmechanismus (24) zum gleichzeitigen Betätigen des ersten Befestigungsmechanismus (8) und des zweiten Befestigungsmechanismus (10) umfasst.

7. Fahrradträger (2) nach Anspruch 6, wobei der Betätigungsmechanismus (24) dazu ausgestaltet ist, eine Eingangskraft auf den ersten Befestigungsmechanismus (8) und den zweiten Befestigungsmechanismus (10) zu übertragen, vorzugsweise derart, dass die gesamte Eingangskraft auf einen aktiven Befestigungsmechanismus (8, 10) des ersten Befestigungsmechanismus (8) und des zweiten Befestigungsmechanismus (10) übertragen wird, wobei der aktive Befestigungsmechanismus derjenige der Befestigungsmechanismen ist, an dem die Gabel angebracht werden soll.

8. Fahrradträger (2) nach Anspruch 7, wobei der Betätigungsmechanismus (24) eine erste Kraftübertragungsanordnung (26) zum Übertragen einer Eingangskraft von einem Betätigungselement (30) auf den ersten Befestigungsmechanismus (8) und eine zweite Kraftübertragungsanordnung (28) zum Übertragen einer Eingangskraft auf den zweiten Befestigungsmechanismus (10) umfasst.

9. Fahrradträger (2) nach Anspruch 8, wobei die erste Kraftübertragungsanordnung (26) dazu ausgestaltet ist, eine über das Betätigungselement (30) eingegebene Eingangskraft, vorzugsweise eine Eingangsdrehkraft in eine translatorische, vorzugsweise gleitende Bewegung oder eine Schwenkbewegung eines beweglichen Klemmelements (32) des ersten Befestigungsmechanismus (8) zu übertragen, und wobei die zweite Kraftübertragungsanordnung (28) dazu ausgestaltet ist, eine Bewegung des Klemmelements (32) in eine Bewegung beweglicher Klemmelemente (18, 22) zu übertragen, vorzugsweise eine translatorische Bewegung der beweglichen Klemmelemente (18, 22) des zweiten Befestigungsmechanismus (10), wobei die beweglichen Klemmelemente (18, 22) des zweiten Befestigungsmechanismus (10) vorzugsweise als pilzartige Abschnitte geformt sind.

10. Fahrradträger (2) nach Anspruch 9, wobei die zweite Kraftübertragungsanordnung (28) dazu ausgestaltet ist, eine Kraftverstärkung bereitzustellen, vorzugsweise mit einem Verhältnis von 1:2, so dass eine Klemmkraft, die an jedem der beweglichen Klemmelemente (18, 22) des zweiten Befestigungsmechanismus (10) verfügbar ist, einer Klemmkraft entspricht, die an dem beweglichen Klemmelement (32) des ersten Befestigungsmechanismus (8) verfügbar ist, und/oder wobei eine Bewegungsrichtung des beweglichen Klemmelements (32) des ersten Befestigungsmechanismus (8) senkrecht zu einer Bewegungsrichtung der beweglichen Klemmelemente (18, 22) des zweiten Befestigungsmechanismus (10) ist.

11. Fahrradträger (2) nach einem der Ansprüche 8 bis 10, wobei die zweite Kraftübertragungsanordnung (28) ein flexibles Zugkraftübertragungselement zum Übertragen einer Kraft umfasst, vorzugsweise einen Draht oder ein Metallband (34, 36), der/das aus rostfreiem Stahl sein kann und Ankerabschnitte (38, 40, 42, 44), vorzugsweise aus Zink, an den jeweiligen Enden umfassen kann, wobei die Ankerabschnitte (38, 40, 42, 44) zum Koppeln der Kraftübertragungselemente an die Klemmelemente (18, 22, 32) oder einen Tragabschnitt (46) an dem Fahrradträger (2) verfügbar sind, wobei die Metallbänder (34, 36) vorzugsweise Nuten, Vorsprünge oder Durchgangslöcher aufweisen, um diese mechanisch mit den Ankerabschnitten (38, 40, 42, 44) zu koppeln.

12. Fahrradträger (2) nach Anspruch 11, wobei die zweite Kraftübertragungsanordnung (28) Führungselemente (48, 50, 52, 54), vorzugsweise Führungsrollen (48, 50, 52, 54) zum Auslenken des flexiblen Zugkraftübertragungselements umfasst, wobei die Führungselemente (48, 50, 52, 54) vorzugsweise als reibungsarme Führungselemente (48, 50, 52, 54) mit Lagern ausgestaltet sind, um diese in Bezug auf den Fahrradträger (2) zu tragen, und/oder wobei die beweglichen Klemmelemente (18, 22) mittels eines ersten flexiblen Zugkraftübertragungselements (36) miteinander gekoppelt sind und wobei das erste flexible Kraftübertragungselement (36) mittels eines zweiten flexiblen Kraftübertragungselements (34) mit dem beweglichen Klemmelement (32) gekoppelt ist.

13. Fahrradträger (2) nach einem der Ansprüche 8 bis 10, wobei die zweite Kraftübertragungsanordnung einen Verbindungsmechanismus umfasst, bei dem die Eingangskraft mittels starrer Verbindungen übertragen wird.

14. Fahrradträger (2) nach einem der Ansprüche 6 bis 13, wobei der Betätigungsmechanismus (24) derart ausgestaltet ist, dass der erste Befestigungsmechanismus (8) und der zweite Befestigungsmechanismus (10) derart koordiniert sind, dass jeder des ersten Befestigungsmechanismus (8) und des zweiten Befestigungsmechanismus (10) innerhalb eines vorbestimmten Bewegungsbereichs betrieben werden kann, ohne die Funktion des anderen Befestigungsmechanismus (8, 10) zu beeinträchtigen.

15. Fahrradträger (2) nach einem der vorhergehenden Ansprüche, wobei der Fahrradträger (2) derart ausgestaltet ist, dass er an einer an einem Fahrzeug vorgesehenen Tragstruktur angebracht werden kann, vorzugsweise an einer an einem Fahrzeug angebrachten Querstange (4).

## Revendications

1. Porte-vélo (2) comprenant une unité de fixation (6) conçue pour fixer la fourche d'un vélo audit porte-vélo (2), **caractérisé en ce que** ladite unité de fixation (6) comprend un premier mécanisme de fixation (8) et un second mécanisme de fixation (10) situés en des points différents du porte-vélo (2) et constituant deux options de fixation coexistantes pour le montage d'une fourche sur ledit porte-vélo (2).

2. Porte-vélo (2) selon la revendication 1, dans lequel ladite unité de fixation (6) est conçue telle qu'elle permet simultanément la fixation d'une fourche à axe traversant et la fixation d'une fourche à attache rapide.

3. Porte-vélo (2) selon la revendication 1 ou 2, dans lequel ladite unité de fixation (6) est conçue telle qu'une ou chacune des options de fixation est une option de fixation par serrage, et/ou dans laquelle ledit premier mécanisme de fixation (8) est destiné à monter ladite fourche à axe traversant par serrage de l'axe traversant de ladite fourche à axe traversant, et ledit second mécanisme de fixation (10) est conçu pour serrer ladite fourche à attache rapide.

4. Porte-vélo (2) selon la revendication 3, dans lequel ledit premier mécanisme de fixation (8) et ledit second mécanisme de fixation (10) sont mutuellement espacés dans la direction longitudinale et/ou verticale du porte-vélo (2), ou sont mutuellement espacés de manière que ledit premier mécanisme de fixation (8) et ledit second mécanisme de fixation (10) sont alignés verticalement.

5. Porte-vélo selon l'une des revendications 3 et 4, dans lequel ladite unité de fixation (6) comprend des mécanismes fonctionnels pour manoeuvrer individuellement ledit premier mécanisme de fixation (8) et ledit second mécanisme de fixation (10).

6. Porte-vélo (2) selon l'une des revendications 3 et 4, dans lequel ladite unité de fixation (6) comprend un mécanisme fonctionnel (24) conçu pour manœuvrer simultanément ledit premier mécanisme de fixation (8) et ledit second mécanisme de fixation (10).

7. Porte-vélo (2) selon la revendication 6, dans lequel ledit mécanisme fonctionnel (24) est conçu pour transmettre une force appliquée audit premier mécanisme de fixation (8) et audit second mécanisme de fixation (10), de préférence de manière à transmettre la totalité de la force appliquée à un mécanisme de fixation actif (8, 10) parmi lesdits premier mécanisme de fixation (8) et second mécanisme de fixation (10), ledit mécanisme de fixation actif étant celui des mécanismes de fixation sur lequel ladite fourche doit être montée.

8. Porte-vélo (2) selon la revendication 7, dans lequel ledit mécanisme fonctionnel (24) comprend un premier dispositif de transmission de force (26) destiné à transmettre une force appliquée d'un élément de manœuvre (30) audit premier mécanisme de fixation (8) et un second dispositif de transmission de force (28) destiné à transmettre une force appliquée audit second mécanisme de fixation (10).

9. Porte-vélo (2) selon la revendication 8, dans lequel ledit premier dispositif de transmission de force (26) est conçu pour convertir une force appliquée par ledit élément de manœuvre (30), de préférence un couple appliqué, en un mouvement de translation, de préférence glissante, ou de pivotement d'un élément mobile de serrage (32) dudit premier mécanisme de fixation (8), et dans lequel ledit second dispositif de transmission de force (28) est conçu pour convertir un mouvement dudit élément de serrage (32) en un mouvement d'éléments mobiles de serrage (18, 22), de préférence en un mouvement de translation desdits éléments mobiles de serrage (18, 22), dudit second mécanisme de fixation (10), lesdits éléments mobiles de serrage (18, 22) dudit second mécanisme de fixation (10) présentant de préférence une forme de champignon.

10. Porte-vélo (2) selon la revendication 9, dans lequel ledit second dispositif de transmission de force (28) est conçu pour amplifier la force, de préférence avec un rapport de 2, de manière que la force de serrage disponible dans chacun desdits éléments mobiles de serrage (18, 22) dudit second mécanisme de fixation (10) corresponde à une force de serrage disponible dans ledit élément mobile de serrage (32) dudit premier mécanisme de fixation (8), et/ou dans lequel la direction du mouvement dudit élément mobile de serrage (32) dudit premier mécanisme de fixation (8) est perpendiculaire à la direction du mouvement desdits éléments mobiles de serrage (18, 22) dudit second mécanisme de fixation (10).

11. Porte-vélo (2) selon l'une des revendications 8 à 10, dans lequel ledit second dispositif de transmission de force (28) comprend un élément souple de transmission de force de traction destiné à transmettre une force, de préférence un câble ou une bande métallique (34, 36) qui peut être en acier inoxydable et comprendre, à ses extrémités, des parties d'ancrage (38, 40, 42, 44), de préférence en zinc, lesdites parties d'ancrage (38, 40, 42, 44) permettant de coupler lesdits éléments de transmission de force auxdits éléments de serrage (18, 22, 32) ou à une partie support (46) sur ledit porte-vélo (2), lesdites bandes métalliques (34, 36) comprenant de préférence des gorges, des protubérances ou des trous débouchants pour le couplage mécanique de celles-ci auxdites parties d'ancrage (38, 40, 42, 44).

12. Porte-vélo (2) selon la revendication 11, dans lequel ledit second dispositif de transmission de force (28) comprend des éléments de guidage (48, 50, 52, 54), de préférence des rouleaux de guidage (48, 50, 52, 54), destinés à fléchir ledit élément souple de transmission de force de traction, lesdits éléments de guidage (48, 50, 52, 54) étant de préférence conçus comme des éléments de guidage (48, 50, 52, 54) à faible frottement avec des roulements pour soutenir ceux-ci par rapport au porte-vélo (2) et/ou lesdits éléments mobiles de serrage (18, 22) étant mutuellement couplés au moyen d'un premier élément souple de transmission de force de traction (36) et ledit premier élément souple de transmission de force (36) étant couplé audit élément mobile de serrage (32) au moyen d'un second élément souple de transmission de force (34).

13. Porte-vélo (2) selon l'une des revendications 8 à 10, dans lequel ledit second dispositif de transmission de force comprend un mécanisme de liaison dans lequel ladite force appliquée est transmise au moyen de liaisons rigides.

14. Porte-vélo (2) selon l'une des revendications 6 à 13, dans lequel ledit mécanisme fonctionnel (24) est conçu tel que ledit premier mécanisme de fixation (8) et ledit second mécanisme de fixation (10) sont coordonnés de manière que chacun desdits premier mécanisme de fixation (8) et second mécanisme de fixation (10) peut être manœuvré à l'intérieur d'une gamme prédéterminée de mouvements sans interférer avec le fonctionnement de l'autre desdits mécanismes de fixation (8, 10).

15. Porte-vélo (2) selon l'une des revendications précédentes, dans lequel ledit porte-vélo (2) est conçu pour être monté sur une structure support existant sur un véhicule, de préférence sur une barre transversale (4) montée sur un véhicule.
